Europäisches Patentamt

European Patent Office

Office européen des brevets

(19)

(11) Publication number : **0 624 024 A1**

## (12) EUROPEAN PATENT APPLICATION

(21) Application number : **94302360.6**

(22) Date of filing : **31.03.94**

(51) Int. Cl.⁵ : **H04N 1/028, H04N 1/18**

(30) Priority : **07.05.93 GB 9309445**

(43) Date of publication of application :
**09.11.94 Bulletin 94/45**

(84) Designated Contracting States :
**DE GB**

(71) Applicant : **CROSFIELD ELECTRONICS
LIMITED
Three Cherry Trees Lane
Hemel Hempstead Hertfordshire HP2 7RH
(GB)**

(72) Inventor : **Kirk, Richard Antony
65 Hemel Hempstead Road
Redbourn, Hertfordshire AL3 7NL (GB)**

(74) Representative : **Skone James, Robert
Edmund
GILL JENNINGS & EVERY
Broadgate House
7 Eldon Street
London EC2M 7LH (GB)**

(54) **Image sensing assembly.**

(57)   An image sensing assembly for sensing an image during relative scanning movement between the image and the assembly. The assembly comprises a first sensor (8) having a two dimensional array of sensing elements (14-17) responsive to incident light to accumulate a charge related to the light incident thereon, and control means for transferring the accumulated charge to successive sensing elements of the array in the scanning direction for accumulation with charge derived for the same image pixel by each successive sensing element. A second sensor (10) comprises a one dimensional array of sensing elements extending substantially orthogonal to the scanning direction. A processor (13) outputs signals for each pixel of the image as the corresponding accumulated charge from the first sensor (8), or the corresponding charge from the second sensor (10), or a combination of the two.

Fig.1.

EP 0 624 024 A1

The invention relates to image sensing assemblies, for example for use in scanning an image carried on a moving drum or other support such as a flat bed.

Recently, an image sensor has been developed which comprises a two dimensional array of sensing elements such as charge coupled devices which are responsive to incident light to accumulate a charge related to the light incident thereon. During relative scanning movement between an image focused onto the sensor and the sensor itself, accumulated charge is transferred from one sensing element to the next in the scanning direction so that an individual pixel in the image is sensed by a line of sensing elements until a final accumulated charge is obtained and read out. An example of such an assembly is the Philtec line-scan camera manufactured by Wessex Technology. One problem with such a sensor is that the output value for each pixel is limited to eight bits and for certain types of image it is desirable to be able to extend the dynamic range of the sensor. For example, it is difficult to get such charge-coupled devices to cover the density ranges present in the typical photographic transparency. It is easy to get 8 or 9 bit luminance data from CCD detectors, but difficult and expensive to get the 14 or more bits required for transparency densities of 3.5 and over.

In accordance with the present invention, an image sensing assembly for sensing an image during relative scanning movement between the image and the assembly comprises a first sensor having a two dimensional array of sensing elements responsive to incident light to accumulate a charge related to the light incident thereon, and control means for transferring the accumulated charge to successive sensing elements of the array in the scanning direction for accumulation with charge derived for the same image pixel by each successive sensing element; a second sensor comprising a one dimensional array of sensing elements extending substantially orthogonal to the scanning direction; and processing means for outputting signals for each pixel of the image as the corresponding accumulated charge from the first sensor, or the corresponding charge from the second sensor, or a combination of the two.

With this invention, an additional, second sensor is added which enables the dynamic range of the overall assembly to be significantly increased. The signals from the second sensor will be used where a high level of exposure is achieved while for low exposures the signal from the first sensor will be used. For intermediate exposures a combination of the two can be used. Thus, the source of the output signal will be chosen in accordance with the type of exposure and this can be determined by monitoring the signals from the first or second sensor.

Typically, the sensing elements of the second sensor will be of the same form as the sensing elements of the first sensor. In this case, each sensing element of the second sensor will be exposed for the same time as each sensing element of the first sensor.

Typically, the second sensor will be provided downstream of the first sensor relative to the scanning direction but in other examples it could be upstream or even positioned within the first sensor.

An example of an image sensing assembly in accordance with the present invention will now be described with reference to the accompanying drawings, in which:-

Figure 1 is a schematic view of an image scanner;

Figure 2 is a schematic block diagram of the image sensing assembly shown in Figure 1; and,

Figure 3 illustrates the output signals obtained from the sensors shown in Figure 2.

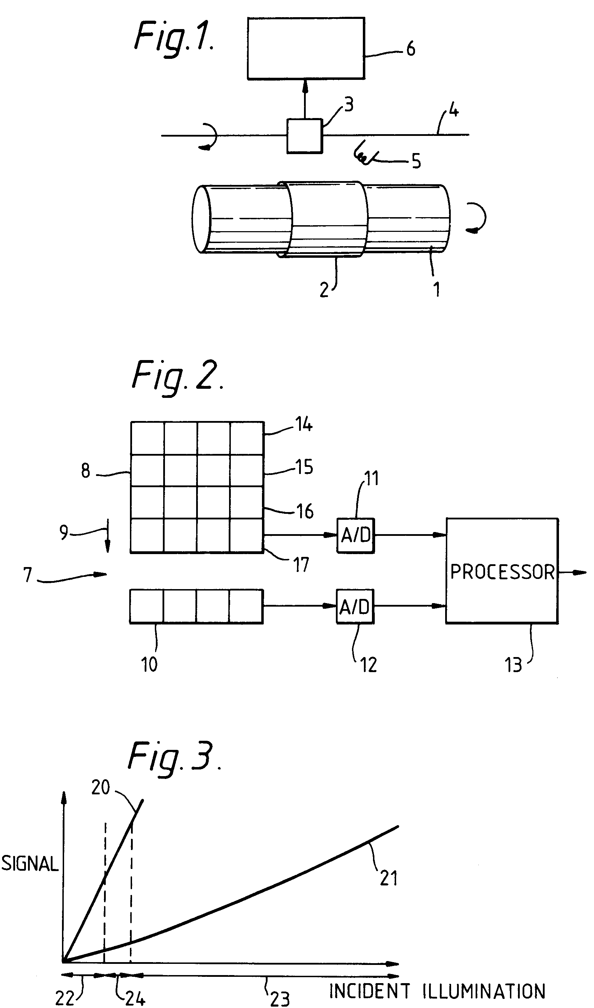

The scanner shown in Figure 1 is generally of a conventional form comprising a rotatably mounted drum 1 on which is mounted an image in the form of a transparency 2. Mounted alongside the drum 1 is a scanning head 3 which incorporates an image sensing assembly to be described in more detail below. The head 3 is mounted on a lead screw 4 which rotates as shown to cause the head 3 to traverse parallel with the axis of the drum 1 as the drum 1 rotates. In this way, the image on the transparency is scanned while being illuminated from a source 5. Output signals from the head 3 are fed to a store or processing electronics of conventional form indicated schematically at 6.

Mounted within the head 3 is a focusing lens (not shown) and an image sensing assembly 7 (Figure 2) on which the portion of the image carried by the transparency 2 passing under the head 3 is focused. The assembly 7 comprises a two-dimensional line-scan CCD camera 8, typically as manufactured by Wessex Technology. In this case, a very simple 4 x 4 array has been shown although in practice the array will be considerably larger. An image on the transparency 2 will scan across the array 8 in the direction of an arrow 9. Positioned downstream of the array 8 is a one-dimensional CCD array 10 formed of a set of sensing elements similar to those of the array 8 and aligned with the elements of the array 8.

Output signals from the arrays 8, 10 are fed to respective analogue-to-digital converters 11, 12 each of which generates an 8 bit value which is fed to a processor 13.

When a first line of image pixels on the transparency 2 starts to be scanned across the array 8, the pixels will first be sensed by a first line 14 of sensing elements. These will accumulate charge during a first clock cycle and at the end of the clock cycle the accumulated charge will be passed to the next sensing element in the scanning direction 9, namely the respective sensing elements in a line 15. The sensing elements in the line 14 will start to sense a new line of pixels while the sensing elements in the line 15 will continue to accumulate charge from the first line of pixels sensed by the line 14 in the previous clock cycle and this will be accumulated with the transferred charge and then the resultant charge, after the next clock cycle, passed to the next line 16. This will continue until the final line 17 scans the first line of pixels to generate final, accumulated values which are output in a conventional manner in series to the A/D converter 11.

Shortly, after the first line of image pixels has been scanned by the line 17 of sensing elements, it will pass under the line of sensing elements of the array 10 which will accumulate charge for a single clock cycle during the passage of those pixels. These single values obtained for a clock cycle are then fed in sequence to the A/D converter 12 and from there to the processor 13.

The processor 13 monitors the incoming data to determine the type of image (highlight, shadow etc) which is being scanned and so as to determine the type of process, if any, which should be performed on the incoming data. For example, if the processor 13 determines that there is good illumination from highlight areas then it is likely that the signal from the sensor 8 will be over saturated and the better signal will be obtained from the sensor 10. The signal from the sensor 10 is then passed from the processor 13. Alternatively, if a very low exposure has been obtained, the signal from the sensor 10 will generally not be sufficient and consequently the signal from the sensor 8 will be used.

In intermediate exposures, the processor 13 will combine the signals from the sensors 8, 10 in predetermined proportions depending upon the level of exposure and output this combined signal.

The different signals obtained from the sensors 8, 10 are illustrated in Figure 3. As can be seen in Figure 3, the signal 20 obtained from the sensor 8 rises much more steeply with an increase in incident illumination as compared with a signal 21 from the sensor 10. In general, however, the signal 20 will provide better information at low illumination in the range 22 while the signal 21 from the sensor 10 will provide better resolution in areas of higher incident illumination in the range 23. In the intermediate range 24 a combination of the two signals will be appropriate.

In general, the processor 13 will generate an output signal for a pixel of the form

$$C_1 * N * \alpha[C_1] + C_N * (1 - \alpha[C_1])$$

where $C_1$ is the data from the sensor 10 due to the pixel;

$C_N$ is the final accumulated data from the sensor 8 due to the pixel;

N is the number of sites in a single line of the sensor 8 in the scanning direction; and,

$\alpha$ is a proportional factor between 0 and 1, $\alpha[C_1]$ indicating that $\alpha$ is determined as a function of $C_1$. Of course, $\alpha$ could be determined as a function of $C_2$.

In areas of low exposure, $\alpha$ is chosen to be small so that the output signal is predominantly determined by $C_N$. In areas of high exposure, the sensor 8 will saturate and $\alpha$ is chosen to be large so that the output signal is predominantly determined by $C_1$.

The actual variation of $\alpha$ with $C_1$ will be determined empirically.

In general, since the above equation has only two 8-bit variables ($C_1$ and $C_N$) it will be possible to put all combinations of the two into a 16 bit look-up table defining $\alpha$.

**Claims**

1. An image sensing assembly for sensing an image during relative scanning movement between the image and the assembly, the assembly comprising a first sensor (8) having a two dimensional array of sensing elements (14-17) responsive to incident light to accumulate a charge related to the light incident thereon, and control means for transferring the accumulated charge to successive sensing elements of the array in the scanning direction for accumulation with charge derived for the same image pixel by each successive sensing element; a second sensor (10) comprising a one dimensional array of sensing elements extending substantially orthogonal to the scanning direction; and processing means (13) for outputting signals for each pixel of the image as the corresponding accumulated charge from the first sensor (8), or the corresponding charge from the second sensor (10), or a combination of the two.

2. An assembly according to claim 1, wherein the sensing elements of the second sensor (10) are of the same form as the sensing elements of the first sensor (8).

3. An assembly according to claim 2, wherein each sensor comprises a CCD array.

4. An assembly according to any of the preceding claims, wherein the second sensor (10) is provided downstream of the first sensor (8) relative to the scanning direction.

5. An assembly according to any of the preceding claims, wherein the processing means (13) outputs a signal for a pixel of the form

$$C_1 * N * \alpha + C_N * (1 - \alpha)$$

where $C_1$ is related to the charge from the second sensor due to the pixel;

$C_N$ is the final accumulated charge from the first sensor due to the pixel;

N is the number of sites in a single line of the first sensor in the scanning direction; and,

$\alpha$ is a factor between 0 and 1.

6. An assembly according to claim 5, wherein the processing means (13) determines $\alpha$ from the finally accumulated charge from the second sensor (10) for the pixel and a predetermined algorithm.

Fig.1.

Fig. 2.

Fig.3.

SIGNAL

INCIDENT ILLUMINATION

5

European Patent
Office

**EUROPEAN SEARCH REPORT**

Application Number

EP 94 30 2360

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 204 230 (SPRAGUE) 20 May 1980 * the whole document * | 1-6 | H04N1/028 H04N1/18 |
| A | GB-A-2 150 785 (SHARP) 3 July 1985 | | |

TECHNICAL FIELDS
SEARCHED (Int.Cl.5)

H04N

The present search report has been drawn up for all claims

| Place of search | Date of completion of the search | Examiner |
|---|---|---|
| THE HAGUE | 26 May 1994 | Van der Zaal, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)